# EUROPEAN PATENT APPLICATION

(11) **EP 4 458 510 A1**
(43) Date of publication of application: **06.11.2024**
(21) Application number: 22912826.9
(22) Date of filing: 04.01.2022
(51) Int. Cl.: B23Q 35/127, B23Q 35/128, B23Q 35/38, B23Q 35/40

(54) **CARPENTRY TOOL FOR HUMAN-ROBOT COLLABORATIVE STEREOTOMY USING A COLLABORATIVE INDUSTRIAL ROBOT SYSTEM CONTROLLED BY ARTIFICIAL VISION CAPABILITIES THAT LOCATES, RECOGNISES AND EXECUTES MACHINING INSTRUCTIONS HAND-DRAWN BY A CARPENTER ON A WORK PIECE, AND OPERATING METHOD**

(30) Priority: 29.12.2021 CL 20213554
(71) Applicant: Universidad Técnica Federico Santa María, Valparaiso (CL)
(72) Inventor: GONZÁLEZ BÖHME, Luis Felipe, 1147 Concón (CL); QUITRAL ZAPATA, Francisco Javier, 1408 Valparaíso (CL); AGUILERA CARRASCO, Cristhian Alejandro, Puerto Montt (CL)
(74) Representative: Mendigutía Gómez, Maria Manuela
(86) International application number: PCT/CL2022/050002
(87) International publication number: WO 2023/122844

(57) **Abstract**

Described is a carpentry tool for human-robot collaborative stereotomy using a collaborative industrial robot system controlled by artificial vision capabilities that locates, recognizes, and executes machining instructions hand-drawn by a carpenter on a workpiece, which can be in installed permanently in a factory or temporarily on site and is formed by a transport unit and a collaborative industrial robot system comprising a control system, a vacuum generator, a backup power system, a positioning means, a user interface, a detection system, an alert system, a manipulator, a horizontal linear movement shaft, a robotic tool changer, an end-effector rack, an automatically changeable eye-in-hand vision system, and a plurality of interchangeable cutting tools; and a method for operating said tool.

## Description

### FIELD OF APPLICATION

The present invention relates to a carpentry tool for human-robot collaborative stereotomy using a collaborative industrial robot system controlled by artificial vision capabilities that locates, recognizes, and executes machining instructions hand-drawn by a carpenter on a workpiece; and a method of operation for instructing the collaborative industrial robot system with a machining task program for a workpiece, by means of a graphical visual language that is known to both the carpenter and the collaborative industrial robot system. More specifically, to a collaborative carpentry tool that can be permanently installed in a factory or temporarily on site, which is composed of a transport unit and a collaborative industrial robot system comprising a control system, a vacuum generator, a backup power system, a positioning means, a user interface, a detection system, an alert system, a manipulator, a horizontal linear movement shaft, a robotic tool changer, an end-effector rack, an automatically changeable eye-in-hand vision system, and a plurality of interchangeable cutting tools.

### PRIOR ART DESCRIPTION

Application WO2014059619 A1 dated 04.24.2014, by Allen Dayong Zhang et al. titled "Object profile for object machining" describes an object profile for object machining, wherein an object profile is generated by measuring attributes of an object, such as its dimensions. The object profile can correspond to a data representation of object attributes. The object profile is employed to determine a machining path for machining the object based on a particular design and/or pattern. An alignment guide is generated that enables an object to be positioned for machining by a machining device. The alignment guide, for instance, can correspond to a particular position in a coordinate space. Aligning an object with the alignment guide includes moving the object to align with the alignment guide. When aligned with the alignment guide, the object can be machined according to a specified object profile and/or pattern.

Application WO2006098922 A2 dated 09.21.2006, by David, A. Carpenter et al. titled "Method and apparatus for cutting a workpiece" describes an apparatus for obtaining a desired cut in a workpiece and a method of using the same. The apparatus has a base with a cutting member moveably coupled thereto. A scanner is coupled with the base for scanning the profile of the workpiece desired to be cut. A computing device may use information from the scanning process to control transverse and longitudinal stepper motors to move the cutting member through a desired cutting path to achieve a cut based on the profile of the workpiece, such as a cope cut. A user can store profiles of previously scanned workpieces in a memory component of the computing device.

Application WO2018017626 A2 dated 01.25.2018, by Patrick Baudisch, titled "System and method for editing 3D models", introduces the concept of 3D editors that treat contents as a set of "assemblies" that interact with each other and the world governed by physics, such as inertia. Based on this general concept we introduce a range of tools for manipulating such assemblies. We then automate several aspects of 3D editing that might otherwise clash with the notion of an interaction based on physics, such as alignment and view management. Some embodiments of the inventive concept target specific fabrication machines. This allows these embodiments to offer smart content elements that embody useful domain knowledge, such as stability and material efficiency. This reduces user interface complexity and allows especially inexperienced users to solve common problems with ease.

Invention patent application DE102008036974 A1 dated 02.11.2010, by Richard Schmidler, titled "Joining system for carpenter-moderate shape of beam, has processing robot, where robot is integrated for light tools of machine zones in joining system for beam", discloses a joining system that has a processing robot. The robot is integrated for light tools of machine zones in a joining system for beam. The robot is compared with the joining aggregate. The lightweight robot is arranged in the last of the machines zones.

Invention patent DE19613774 C1 dated 10.30.1997, by Richard Schmidler and Hans Schmidler, titled "Timber beam working method for carpentry work", describes that the timber beams are cut to length, drilled, milled, etc. All cutting work is carried out by a swivelable water jet cutting head. The swivelable water jet cutting head is carried on a computer-controlled robot arm. The cutting head is positioned within the room.

Invention patent US5345687A dated 13.09.1994, by Hitoshi Matsuura and Eiji Matsumoto, titled "Noncontact tracing control device", describes a a copy control device wherein a model and a workpiece moved relatively with a tracer head and a tool in an X-Y plane, measured distance values to the surface of the model, which are detected by first and second non-contact detectors obliquely mounted on the tracer head rotatable about a Z axis are periodically sampled to obtain the coordinate values of measured points on the surface of the model, a normal vector (Nn) on the surface of the model is calculated from three coordinate values out of four measured points (P1n-1, P1n, P2n-1, P2n) successively obtained by the both detectors, and the tracer head is rotated so as to move along a projection (N1n) of the normal vector (Nn) on the X-Y plane, so that measuring axes of the detectors are controlled to be approximately vertical to the surface of the model. After two points are selected from four measured points, such a point is selected out of the remaining two measuring two points as a third point that satisfies a condition that a point of intersection between a perpendicular from such a point to a straight line passing through the previously selected two points and the above-mentioned straight line is interposed between the previously selected two points, and that satisfies a condition that the length of the above mentioned perpendicular is larger than a predetermined value.

Invention patent US4740904 A dated 04.26.1988, by John B. Nagle, titled "Line following system and process", describes a line following system adapted for scanning a two dimensional line segment image with a scanner device such that the cartesian analog array is created in digital memory as a quantifiable representation of the image. The cartesian array is processed by a method of counting consecutive positive bits along a series of selected vectors and vector pairs and storing the data in a count register memory for each working bit selected. The method utilizes a series of working bits until the entire cartesian array has been mapped. The data is then forwarded to a selected output device, such as a digital plotter, a monitor screen or a CAD system. The primary use of the invention is a component of an overall system utilized in CAD for electronic, artistic and architectural applications.

Invention patent application CN1603072 A dated 04.06.2005, by Hu Zonghe, titled "System and method for generating cutting path automatically", describes a system and method that can automatically produce a cutting path. The system includes an image up-taking device and a processing device. Firstly, the image capturing device takes the image of the circuit board to obtain an image signal and transmits the image signal. Secondly, the processing device is accepted and processes the image signal to obtain at least the optimal cutting path and the corresponding ratio of the reference point position, and store them. Finally, before cutting again, it compares the expected cutting circuit board reference point with the stored corresponding ratio of the reference point position; and is decided whether it is necessary to modify the expected circuit board cutting path for cutting according to the contrasted result, so as to omit the mechanical calibration of the circuit board. Thus, it can simplify the modification of the cutting path, save manufacturing time, reduce the cost and improve the goodness rate of the circuit board.

There is no prior art of a carpentry tool for human-robot collaborative stereotomy using a collaborative industrial robot system controlled by artificial vision capabilities that locates, recognizes, and executes machining instructions hand-drawn by a carpenter on a workpiece; and a method of operation that does not require 3D CAD/CAM modeling or manual data input programming or off-line programming or teach programming, for instructing the collaborative industrial robot system with a machining task program for a workpiece, using a graphical visual language that is known to both the carpenter and the collaborative industrial robot system. More specifically, a collaborative carpentry tool that can be permanently installed in the factory or temporarily on site, having a transport unit that has space for a backup power system and a vacuum generator, and a collaborative industrial robot system comprising a control system, a vacuum generator, a backup power system, a positioning means, a user interface, a detection system, an alert system, a manipulator, a horizontal linear movement shaft, a robotic tool changer, an end-effector rack, an **automatically changeable eye-in-hand vision system,** and a plurality of interchangeable cutting tools.

### INTRODUCTION

The proposed collaborative carpentry tool is applicable both in the construction of wooden buildings, bridges, and boats and in the manufacture of furniture, carts, utensils and other wooden objects, allowing a carpenter with no prior knowledge of robot programming to naturally instruct the collaborative carpentry tool with a machining task program specific to each workpiece by simply tracing on its surface the geometric figures and graphic signs representing the design and specifications of the stereotomy in a workpiece. The operating method of the proposed collaborative carpentry tool supports a collaborative stereotomy of wood where the carpenter performs the creative work and the collaborative carpentry tool performs the hard work.

The method of operation of the proposed invention allows for reduced positioning time of the workpiece prior to machining because it does not require an operator to instruct the collaborative carpentry tool the workpiece coordinates, also known as "part zero". In addition, it facilitates robotic machining of workpieces with irregular and complex shapes because it does not require an operator to instruct the collaborative carpentry tool multiple coordinate systems of multiple workpiece work planes. Instead, the artificial vision capabilities of the proposed invention allow the collaborative industrial robot system to locate, in a fraction of a second, the relative position and orientation of each geometric figure and graphic sign drawn by the carpenter on the workpiece with respect to the center point of the collaborative carpentry tool mounted on the mechanical interface of the manipulator. Consequently, the placement of the workpiece in the positioning of the proposed collaborative carpentry tool does not require any precision. This speeds up the operation each time the workpiece must be removed to trace further machining instructions on it or to temporarily assemble it to check if it fits with another one.

The proposed collaborative carpentry tool supports human-robot collaborative operation for many reasons: firstly, because its artificial vision capabilities allow a carpenter and the collaborative industrial robot system to share the same collaborative workspace, in a safe manner, in compliance with ISO 10218 and ISO/TS 15066 standards; also because it automatically adapts to the alternation between the tracing, cutting, and assembling stages of the usual carpenters' work cycle; it adapts to the carpenter's graphical visual language; it adapts to the use of manual drawing and measuring instruments such as pencil, chalk line, square, template, transcribing compass, plumb, and level; and furthermore, it adapts to on-site drawing and measuring methods such as transcribing the contour of immovable surfaces of the job site, which is frequently applied in architectural heritage repair but also in log cabin construction.

The main task of carpentry is the stereotomy of wood, which consists mainly of cutting pieces to fit them together as components of a construction system. More specifically, it consists of tracing, cutting, and carving opposing and complementary shapes into pairs of wood pieces to assemble them into complex structures such as buildings, bridges, and boats. These joint forms, generically called "mortise and tenon" and its many variants, are also used in the manufacture of carts, furniture, utensils, and other wooden objects. The stereotomy of wood, therefore, comprises two alternating activities: drawing and cutting the workpiece. The traditional practice of wood stereotomy brings together a set of methods and techniques that offer a high degree of flexibility in the design of pieces and their joining to form the framework of buildings, boats, and furniture. The manual practice of wood stereotomy also offers a high degree of adaptation to the material, the workpiece, and the environmental conditions of the operating environment. The practice of stereotomy in French carpentry was declared Intangible Cultural Heritage of Humanity by UNESCO in 2009.

At a high level of abstraction, the tracing of the workpiece consists of drawing on each work plane of the workpiece the corresponding orthogonal projection of a three-dimensional geometric figure that the carpenter has in mind and must remove from the workpiece to obtain all or part of the intended shape for that workpiece. At a lower level of abstraction, it is the drawing of the cuts and holes, that is, the specification of the machining operations, that must be executed on the workpiece. The specification of the types of cuts required such as, for example, mortising, carving, grooving, and planing is partially implicit in some of the one- and two-dimensional geometric figures that the carpenter draws on the workpiece and is partially explicit in the graphic signs that the carpenter adds to define categorical and numerical properties of some of the geometric figures. For example, an "X" sign on a straight line categorizes that line as an "end cutting line", also called a "squaring line", that indicates where and how to cut off one end of the workpiece to rectify it. On the other hand, an "X" sign within a rectangle categorizes that rectangle as a "blind box", also called a "mortise", that is, one that does not go through the workpiece, while an "O" sign categorizes the same rectangle as a "through box", that is, one that goes through the workpiece.

The geometric figures that the carpenter draws by hand on the workpiece may include points, lines, curves, circles, polygons, and any combination thereof. The graphic signs, on the other hand, may include letters, numbers, and the symbols of a communication system also called "the carpenters' alphabet" that is known and passed down from generation to generation by the carpenters of a given place or culture. Thus, geometric figures and graphic signs complement the specification of the required shape, position, and type of cut. The geometric figures and graphic signs of the hand drawing of the workpiece compose a domain-specific graphic visual language.

Hand-drawing the workpiece serves two purposes: to unambiguously specify and communicate the cutting task to co-workers and apprentices. The carpenter in charge of executing the cuts on the workpiece determines which tools to use based on domain-specific knowledge and tool availability. The carpenter always draws the workpiece before cutting it, but does not always complete the workpiece drawing in one go. The reasons may be various, such as because some of the geometric figures and graphic signs will be lost with the next cut, or because some geometric figures, such as a circle with an "X" sign in its center indicating where to drill a hole for a dowel, can only be drawn on work planes, such as the cheeks of a tenon, that result from cutting the workpiece, or because cuts must first be drawn to rectify the workpiece and then cuts must be drawn to assemble it, or because after some cuts it is necessary to remeasure the workpiece and possibly adapt the remaining layout to the actual dimensions of the workpiece, or perhaps because after some cuts it is necessary to temporarily assemble the workpiece to check for a good fit before continuing with the layout.

Carpenters of buildings, bridges, boats, and furniture develop accuracy, precision, and specialized skills such as being able to draw, cut, and assemble not only rough sawn or roughhewn pieces of lumber, but also crooked, bowed, and bifurcated logs into a structure that must still be plumb, even, and square. Hand-drawing wood not only enables the carpenter to process workpieces made of graded, squared, planed, kiln-dried, or remanufactured wood, but also workpieces made of ungraded, green, irregular, or deformed wood, applying the same force, but consuming less energy throughout the process. In carpentry, hand drawing of the workpiece offers several advantages over conventional 3D CAD/CAM modeling, because the correct location of the cuts on the workpiece at the time of machining does not depend on how accurately the 3D representation of the workpiece was modeled nor the geometric regularity and dimensional stability of the actual workpiece.

The main methods of hand-drawing wood in carpentry are the "scribe rule" and the "square rule".

The "scribe rule" is the oldest method of hand-drawing wood and is used by carpenters on very irregular or misshapen workpieces such as round, crooked, bent, and bifurcated pieces of tree that do not allow the use of a carpenter's square. However, the workpieces are not interchangeable with each other and the method requires a lot of free space for drawing and handling the workpieces temporarily mounted on the floor or on trestles. In a mode of application for new constructions in the workshop or on site, two or more workpieces are temporarily placed on a horizontal plane, but one on top of the other, in the position and orientation they will take in their final assembly. In the workshop, the position and orientation of the assembly pieces is drawn on the floor and the workpieces are placed on top. The entire assembly is carefully leveled and using the plumb and level as universal reference planes the irregularities of the contact and joint surfaces between the pieces are transcribed by means of plumbs hanging from stringers, compasses, or other devices. No numerical measurements are required, except for floor drawing in the workshop. In another mode of application for new constructions on site, the workpiece is temporarily placed on an existing, fixed piece at a location such as, for example, the plinth of a building made of masonry or a natural rock that serves as the base for a post and using the transcribing compass and level, the profile of the contact surface of the piece that is fixed in place is copied onto the workpiece. The same procedure is used for drawing the contact and assembly surface between logs of a log cabin. In a mode of application for on-site restoration and rehabilitation, a template made of wood or cardboard is temporarily positioned in the place of an existing assembly where a part is missing or where there is a part to be replaced by an ad hoc prosthesis. On site, the irregularities of the joint surfaces between each part of the existing assembly are transcribed to the template and from there to the workpiece that once carved will act as a prosthesis.

The "square rule" is the preferred method of hand-drawing wood for both professional and novice carpenters. This method requires less space for drawing and manipulating workpieces than the scribe rule method because each workpiece can be drawn independently. In addition, the resulting workpieces of the same type are interchangeable with each other in their final assembly. If the workpiece surfaces are flat and sufficiently squared to serve as a reference to a local workpiece coordinate system, the method suggests imagining that an ideal but smaller workpiece exists inside the actual workpiece. This ideal workpiece usually shares two reference surfaces of the real workpiece containing it. The joints of the opposite surfaces, that is, those that will not be used as references, can then be drawn towards the inner surfaces of the ideal workpiece. This is done by reducing the size of the workpiece at the joint. Since size reductions are drawn at uniform distances from the reference surfaces -or, in the case of an arched workpiece, to a chalk line drawn parallel to them- they can vary in depth depending on how much larger than the ideal workpiece the actual workpiece containing it is. Sometimes a workpiece blank may be so far out of square that the ideal workpiece cannot share any of its surfaces; in this case, centerlines or other reference planes must be drawn square on the ends of the workpiece and connected along its surface with chalk lines.

The hand drawing of the workpiece itself involves different activities from selecting the appropriate workpiece for the job, measuring the workpiece, determining possible irregularities and deformations, drawing the required cuts to rectify the workpiece, labeling with graphic signs the surfaces of the workpiece to identify its position and orientation within the intended assembly, determining the coordinate system of the workpiece, marking on the workpiece the vertices, edges, and reference planes from which to determine all the distances and angles of the layout, and finally drawing each geometric figure and categorizing some of them by means of graphic signs. The drawing of the workpiece involves ad hoc design, so it is a creative task that depends mainly on the carpenter's ingenuity and spatial visualization skills. Cutting the workpiece is rather a task that depends primarily on strength and repeatability. Both tasks equally demand consistency.

Workpiece cutting *per se* involves different operations and tools that depend on various factors such as size, moisture content, grain direction, number of knots, and the species of wood from which the workpiece is made. Determining the appropriate cutting operations and tooling requires spatial visualization of the resulting shape and expert knowledge that the carpenters apply as soon as they inspect the workpiece. In other words, drawing, cutting, and the workpiece itself are interdependent. The cutting task can become extremely strenuous and thus lead to serious accidents. Frequent alternation between drawing, cutting, and provisional assembly can lead to loss of accuracy and precision, increasing errors and tolerance accumulation.

Currently, hand-drawing of wood is only supported in cutting tasks by hand and power tools. There are no numerically controlled machine tools or robots that support hand drawing of the workpiece. Assemblers and other computer numerical control machines only support computer-aided design (CAD) and computer-aided manufacturing (CAM) methods. In the case of assemblers, they are specific-purpose tools, intended for serial cutting, in large quantities and modest variety of sizes and shapes that they can machine. Assemblers take up a lot of operating space and permanent factory installation. The alternative to the assembler is an industrial robot. They come in many sizes, weights, and shapes. Many models take up less installation and operating space than the average assembly machine and can be installed temporarily on site at no extra cost. An industrial robot is an automatically controlled, reprogrammable, multipurpose manipulator, programmable in three or more axes, that can be fixed in place or mobile for use in industrial automation applications. Industrial robots offer a high degree of flexibility to perform a wide variety of tasks depending on the tool they handle and the configuration of their work cell, that is, whether the robot is floor-mounted, ceiling-mounted, or wall-mounted, and whether it is fixed in place, moves on a track, or moves freely. Unlike an assembler, an industrial robot can handle any general-purpose or specific-purpose tool, whether manual, electric, or by computer numerical control. To maximize such flexibility, it is necessary to program the set of instructions for the motion and auxiliary functions that define each specific task envisioned for the industrial robot or industrial robot system individually. There are basically three methods of programming a robot: manual data input programming -currently out of use- which consists of generating and entering the task program directly into the robot's control system, e.g., via switches, connection boards, or keyboards; off-line programming, which consists of generating the task program on devices separate from the robot and entering it into the robot at a later time, e.g., via data networks or data storage devices; and teach programming; and teach programming, which consists of manually guiding the robot's end-effector, or manually guiding a mechanical simulation device, or using the teach pendant to move the robot through the positions defining the task. In any case, each manufacturer has a unique programming language for its robots.

ISO 8373 defines an industrial robot system as a system comprising the industrial robot, end-effectors, and any machinery, equipment, devices, external auxiliary axes or sensors that support the robot in performing its task. The ISO/TS 15066 technical specification defines a collaborative industrial robot system as a robot system specially designed for collaborative operation. Collaborative operation is defined as the state in which a purpose-designed robot system and a human work within a collaborative workspace. ISO 8373 defines collaborative workspace as the space within the space defined by the protection perimeter, where the robot and a human can perform tasks simultaneously during production operation. Collaboration between human workers and industrial robots is a viable alternative to full automation, which worldwide threatens to extinguish many traditional jobs and trades such as carpentry and stonemasonry, among others. Human-robot collaborative operation requires at least one method of instruction of the robot system that is mixed-initiative, interactive, modifiable in real time, and allows for imprecise teaching of tasks.

### OBJECTIVE OF THE INVENTION

A first objective of the invention is to provide a collaborative carpentry tool for human-robot collaborative stereotomy by means of a collaborative industrial robot system controlled by in artificial vision capabilities that locates, recognizes, and executes machining instructions hand-drawn by a carpenter on a workpiece. More specifically, to a collaborative carpentry tool that can be permanently installed in a factory or temporarily on site, which is composed of a transport unit and a collaborative industrial robot system comprising a control system, a vacuum generator, a backup power system, a positioning means, a user interface, a detection system, an alert system, a manipulator, a horizontal linear movement shaft, a robotic tool changer, an end-effector rack, an **automatically changeable eye-in-hand vision system,** and a plurality of interchangeable cutting tools. A second objective of the invention is to provide a method for operating a collaborative carpentry tool for human-robot collaborative stereotomy by means of a collaborative industrial robot system controlled by artificial vision capabilities that locates, recognizes, and executes machining instructions hand-drawn by a carpenter on a workpiece, comprising the steps of:
(a) a carpenter hand-draws machining instructions on a workpiece using a graphical visual language that is known to both the carpenter and the collaborative carpentry tool and places the workpiece in the positioning means;
b) the collaborative carpentry tool inspects the workpiece, locates the geometric figures and graphic signs drawn on the workpiece and recognizes in them the machining instructions; and
c) the carpenter validates the inspection results; the collaborative carpentry tool executes the workpiece machining instructions and releases the workpiece.

Otherwise, the carpenter cancels the operation and the collaborative carpentry tool releases the workpiece.

### BRIEF DESCRIPTION OF THE FIGURES

FIG. 1 depicts a main isometric view of the collaborative carpentry tool of the invention.
FIG. 2 depicts a front view of the collaborative carpentry tool of the invention.
FIG. 3 describes a side view of the collaborative carpentry tool of the invention.
FIG. 4 describes a plan view of the collaborative carpentry tool of the invention.
FIG. 5 describes an isometric view of the transport unit of the invention.
FIG. 6 describes an isometric view of the collaborative industrial robot system of the invention.
FIG. 7 describes a first example of application for performing human-robot collaborative stereotomy of a brace, in a stage of hand-drawing of machining instructions by a carpenter.
FIG. 8 describes a first example of application for performing human-robot collaborative stereotomy of a brace, in a stage of localization and recognition of machining instructions by artificial vision.
FIG. 9 describes a first example of application for performing human-robot collaborative stereotomy of a brace, in a stage of executing machining instructions.
FIG. 10 describes a second example of application for performing human-robot collaborative stereotomy of a panel, in a stage of localization and recognition of machining instructions by artificial vision.
FIG. 11 describes a second example of application for performing human-robot collaborative stereotomy of a panel, in a stage of executing the machining instructions.
FIG. 12 describes a third example of application for performing human-robot collaborative stereotomy of a beam, in a stage of localization and recognition of machining instructions by artificial vision.
FIG. 13 describes a third example of application for performing human-robot collaborative stereotomy of a beam, in a stage of executing the machining instructions.
FIG. 14 describes a first example of a brace obtained from the human-robot collaborative stereotomy of the invention.
FIG. 15 describes a second example of a panel obtained from the human-robot collaborative stereotomy of the invention.
FIG. 16 describes a third example of a beam obtained from the human-robot collaborative stereotomy of the invention.

### DESCRIPTION OF A PREFERRED EMBODIMENT

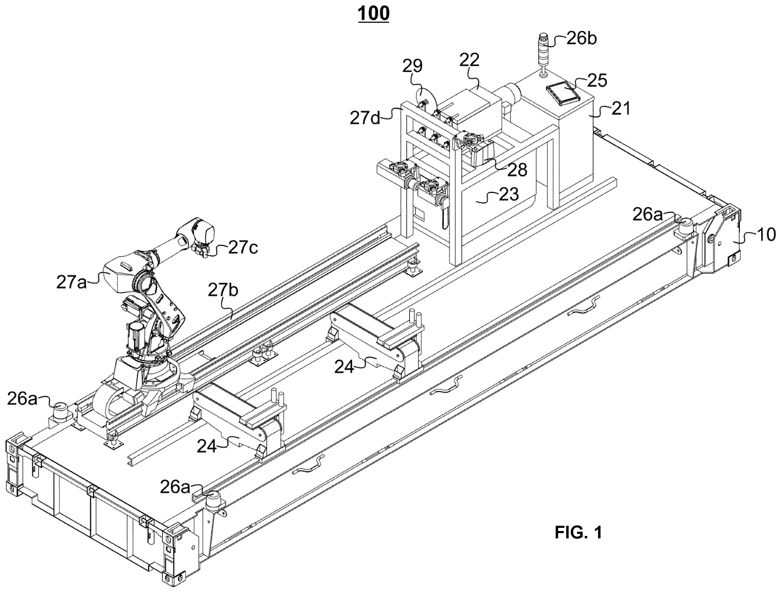

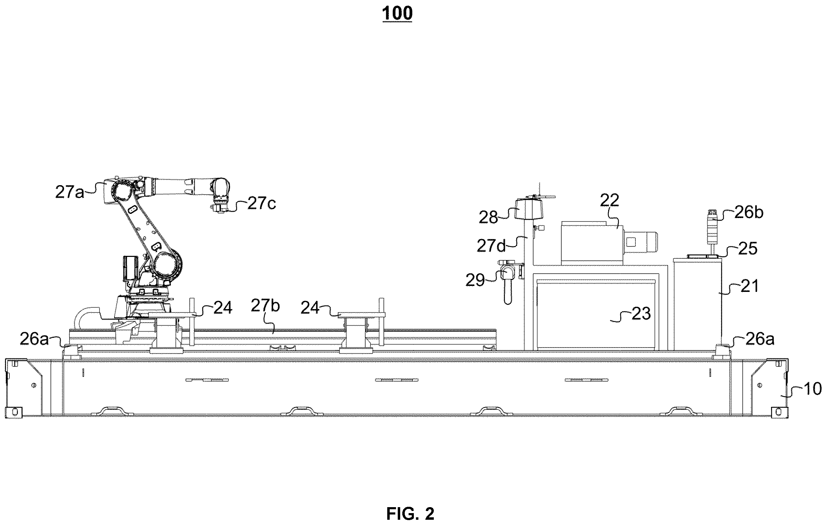

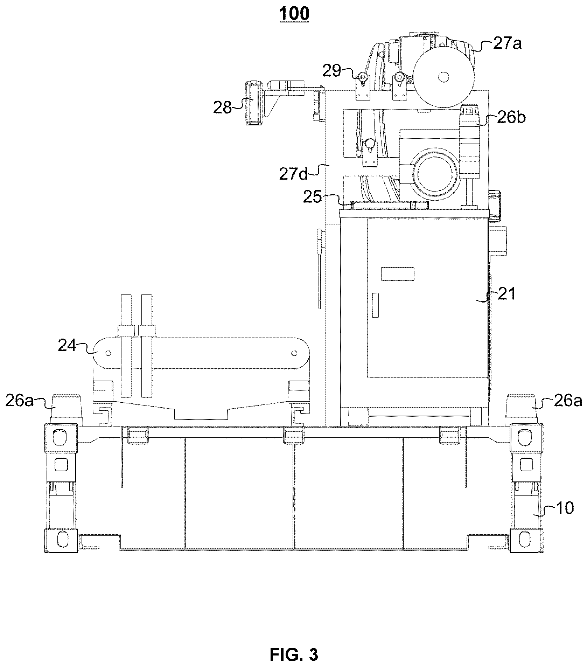

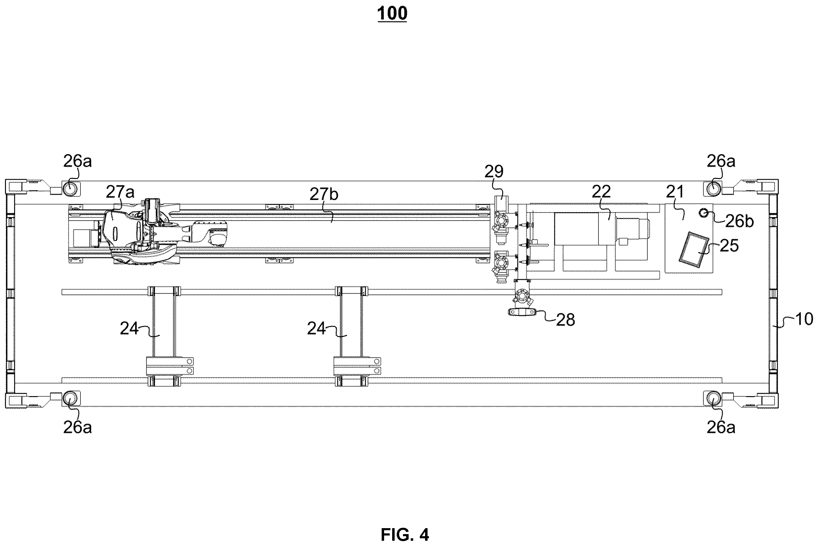

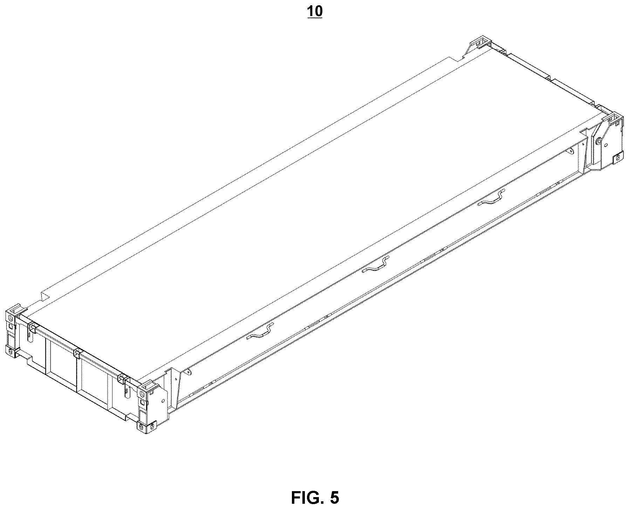

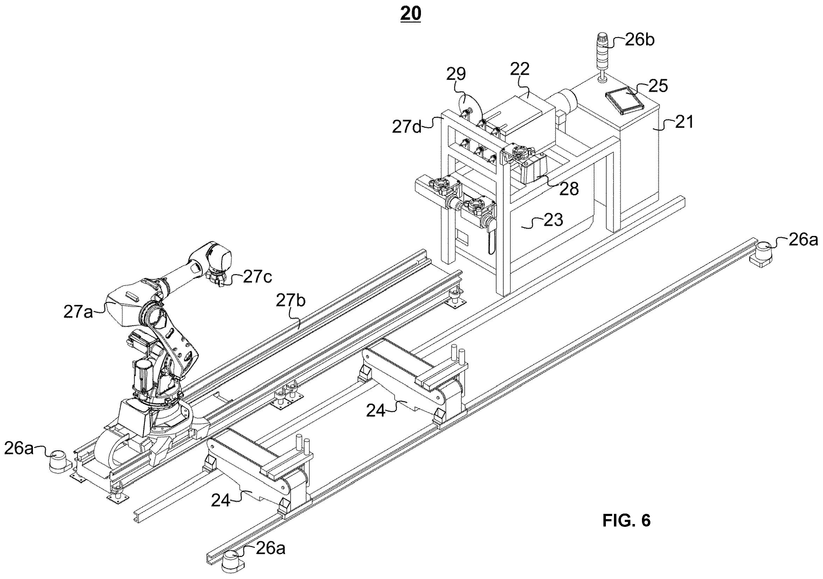

The collaborative carpentry tool (100) described in FIGs.1 to 4, that can be permanently installed in a factory or temporarily on site, comprises a transport unit (10) shown separately in FIG. 5, and a collaborative industrial robot system (20) shown separately in FIG. 6; the collaborative carpentry tool (100) shown in FIG. 1, comprises a control system (21), a vacuum generator (22), a backup power system (23), a positioning means (24), a workpiece, such as, for example, a brace (30.1), a panel (30.2), or a beam (30.3), a user interface (25), a detection system (26a), an alert system (26b), a manipulator (27a), a horizontal linear movement shaft (27b), a robotic tool changer (27c), an end-effector rack (27d), an automatically changeable eye-in-hand vision system (28), and a plurality of interchangeable cutting tools (29).

The transport unit (10) is a platform intended for sea or river transport, land transport, and multimodal transport in accordance with ISO 668, which can be permanently installed in the factory or temporarily on site.

The control system (21) is a device that processes the set of logic and power control functions that allows the monitoring and control of the mechanical structure of the vacuum generator (22), the backup power system (23), the positioning means (24), the manipulator (27a), the horizontal linear movement shaft (27b), the robotic tool changer (27c), the end-effector rack (27d), the plurality of interchangeable cutting tools (29), and the communication with the environment via the automatically changeable eye-in-hand vision system (28), the user interface (25), the detection system (26a), and the alert system (26b). The control system (21) is arranged at one end of the transport unit (10), outside the operational space of the manipulator (27a).

The vacuum generator (22) is a device which, pneumatically by means of compressed air, or electrically by means of a displacement pump, is capable of creating the vacuum required by the robotic tool changer (27c) to hold and secure the automatically changeable eye-in-hand vision system (28) and each of the plurality of interchangeable cutting tools (29). The vacuum generator (22) is arranged at one end of the transport unit (10) next to the control system (21).

The backup power system (23) is an electrical power source that can come from a power generator such as, for example, an internal combustion engine, fuel cells, electromagnetic generator, photovoltaic cells, or from an energy storage such as, for example, a battery bank, capacitors and super capacitors, or from an energy harvester and nano-generator such as, for example, a micro/nano-energy source, self-powered sensors and flexible transducers. The backup power system (23) is used only when it is not possible to connect to an installed power grid and is arranged at one end of the transport unit (10) next to the vacuum generator (22).

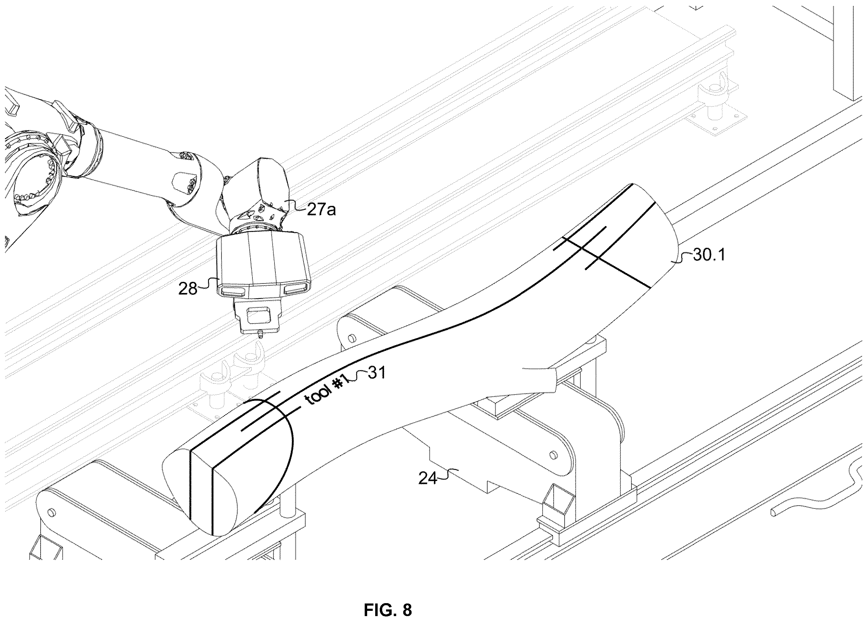

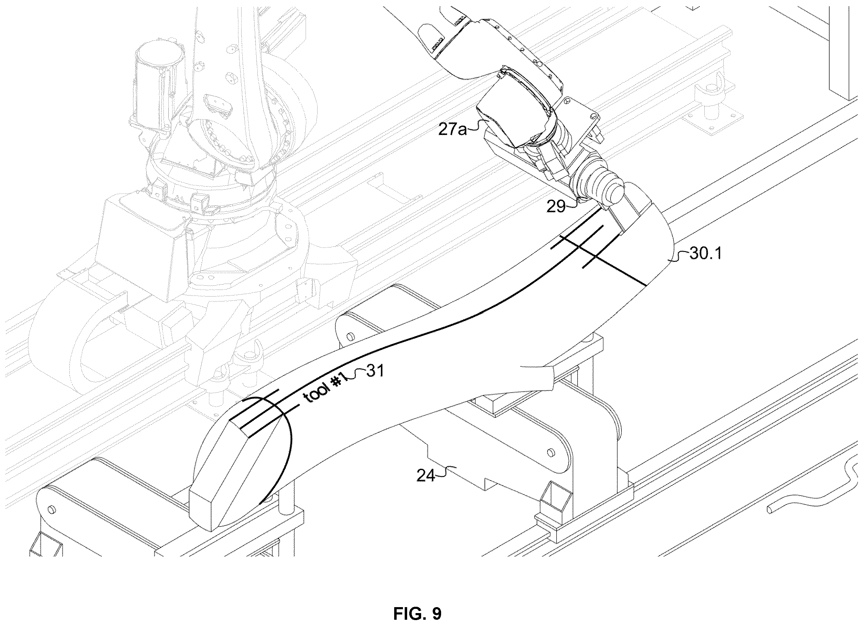

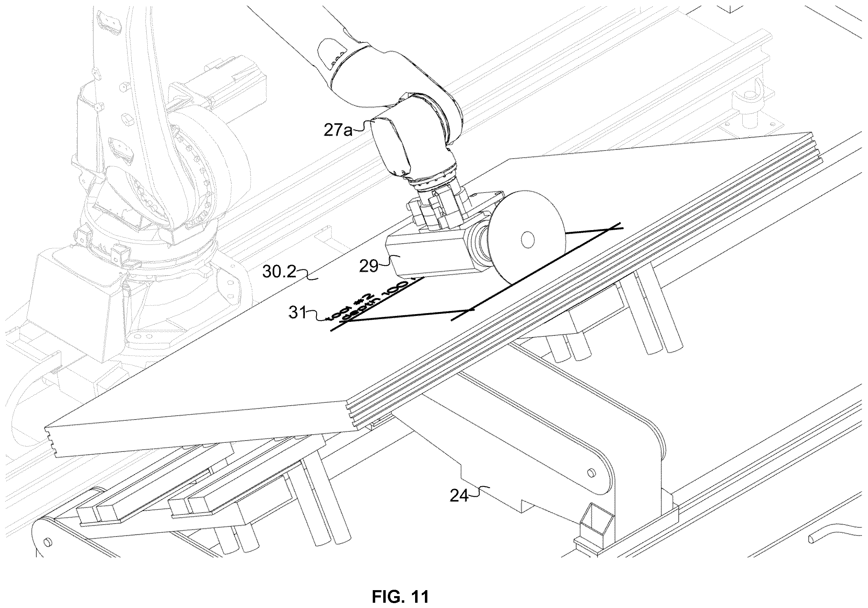

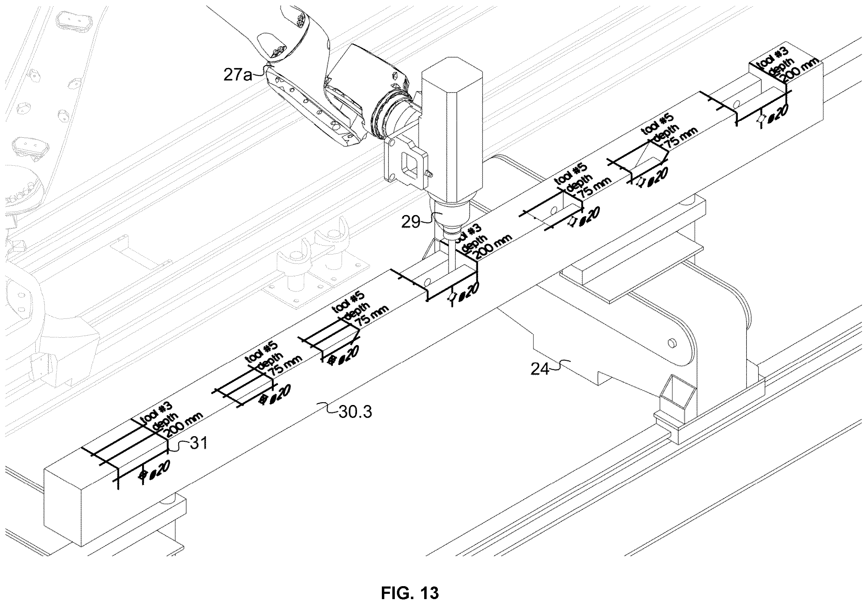

The positioning means (24) is a modular and extendable electromechanical device, such as the TW-CONCEPT LINE system from TECHNOWOOD, which holds and secures the workpiece, automatically positions and repositions it in at least 2 translational degrees of freedom and automatically orients and reorients it in at least 1 rotational degree of freedom during a machining operation as required and in order to enable the manipulator (27a) to inspect and machine both bent logs and straight plates and bars, as described in the application examples of FIGs. 8 to 13. The positioning means (24) is arranged in the direction of the longitudinal axis of the transport unit (10) and over almost its entire length, with both ends free to facilitate its potential connection to conveyor belts and other workpiece input and output means; in case of installing the collaborative carpentry tool (100) permanently in the factory to be part of a larger production line, for better operation, two positioning means (24) are provided.

The user interface (25) is a means for exchanging information and actions between a carpenter (40) and the collaborative industrial robot system (20) during human-robot interaction, which may be situationally housed on a portable electronic device such as, for example, a tablet, a smartphone, or a display mounted on the head of the carpenter (40), not shown.

The detection system (26a) is a set of software-interrelated sensors such as, for example, of the 3D LiDAR (three-dimensional light detection and ranging) type, distributed on the four corners of the transport unit (10) that continuously scan its environment in three dimensions in order to detect and differentiate people and objects, identify the direction of movement of persons in the area of operation of the collaborative industrial robot system (20), and automatically activate the alert system (26b) and other protective measures established by ISO 10218, such as interrupting the operation of the manipulator (27a) and the currently mounted interchangeable cutting tool (29).

The alert system (26b) is an electronic device such as, for example, an industrial signal tower, which provides visual and audible indicators of the status of the collaborative industrial robot system (20) to the carpenter (40) and anyone in its vicinity. The alert system (26b) is arranged within the transport unit (10), outside the operational space of the manipulator (27a).

The manipulator (27a) is an industrial robot such as, for example, a KR QUANTEC from KUKA, which manipulates an automatically changeable eye-in-hand vision system (28) for inspecting the workpiece, locating and recognizing the machining instructions (31) hand-drawn by the carpenter (40), and manipulating a plurality of interchangeable cutting tools (29) for executing the machining instructions (31). The manipulator (27a) is mounted on a horizontal linear movement shaft (27b) comprising two parallel rails, which enables it to move in the direction of the longitudinal axis of the transport unit (10) and of displacement of the positioning means (24).

The horizontal linear movement shaft (27b) is an external auxiliary axis of the manipulator (27a) that adds to it 1 degree of translational freedom in order to increase its range and working space, and is arranged next to the positioning means (24) with one of its ends terminating in the end-effector rack (27d) to facilitate the approach of the manipulator (27a) to the automatically changeable eye-in-hand vision system (28) and to the plurality of interchangeable cutting tools (29).

The robotic tool changer (27c) is an electronically controlled automatic end-effector coupling device such as, for example, the ROBOTIC TOOL CHANGER from ATI INDUSTRIAL AUTOMATION, comprising two opposing and complementary parts to be coupled and secured to each other. The part that picks up the end effectors is mounted on the mechanical interface of the manipulator (27a). The part that is being picked up is mounted on the automatically changeable eye-in-hand vision system (28) and on each of the plurality of interchangeable cutting tools (29). The robotic tool changer (27c) is capable of passing through both parts electrical signals, gases, and fluids to and from the end-effector. The robotic tool changer (27c) is powered by pneumatic energy from the vacuum generator (22) to automatically pick up, hold, and set down the automatically changeable eye-in-hand vision system (28) and the plurality of interchangeable cutting tools (29).

The end-effector rack (27d) is an automatic tool dispenser reciprocating the robotic tool changer (27c), which is provided with an electronically controlled gripping or clamping structure powered by pneumatic energy from the vacuum generator (22) for automatically holding, releasing, and receiving the automatically changeable eye-in-hand vision system (28) and the plurality of interchangeable cutting tools (29).

The automatically changeable eye-in-hand vision system (28) is a software-operated, three-dimensional data capture device, such as, for example, the ZIVID TWO camera from ZIVID, that locates and recognizes surface information of objects in the scene, in this case, the machining instructions (31), by projecting structured light. The automatically changeable eye-in-hand vision system (28) has the part that is to be picked up by the robotic tool changer (27c) mounted on it.

The plurality of interchangeable cutting tools (29) is a set adaptable in variety and quantity of electronically controlled wood machining tools arranged in the end-effector rack (27d) for use by the manipulator (27a) to execute machining instructions (31) hand-drawn by a carpenter (40) on an exemplary workpiece (30.1, 30.2, 30.3). Each of the plurality of interchangeable cutting tools (29) has the part that is to be picked up by the robotic tool changer (27c) mounted on it.

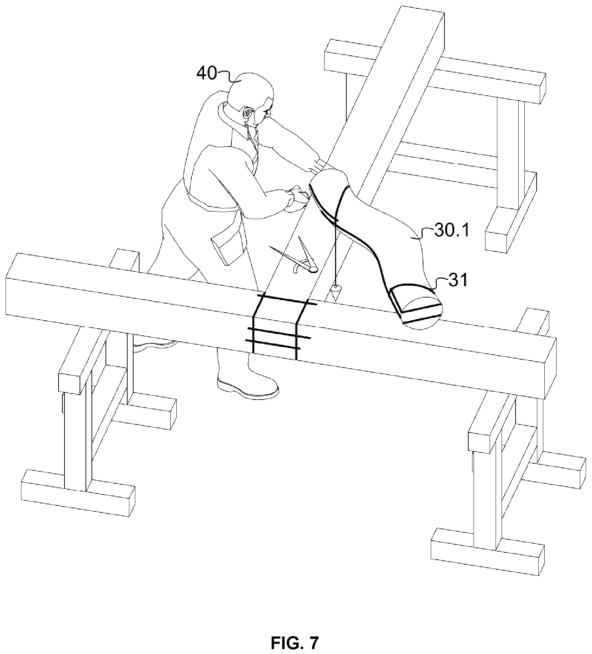

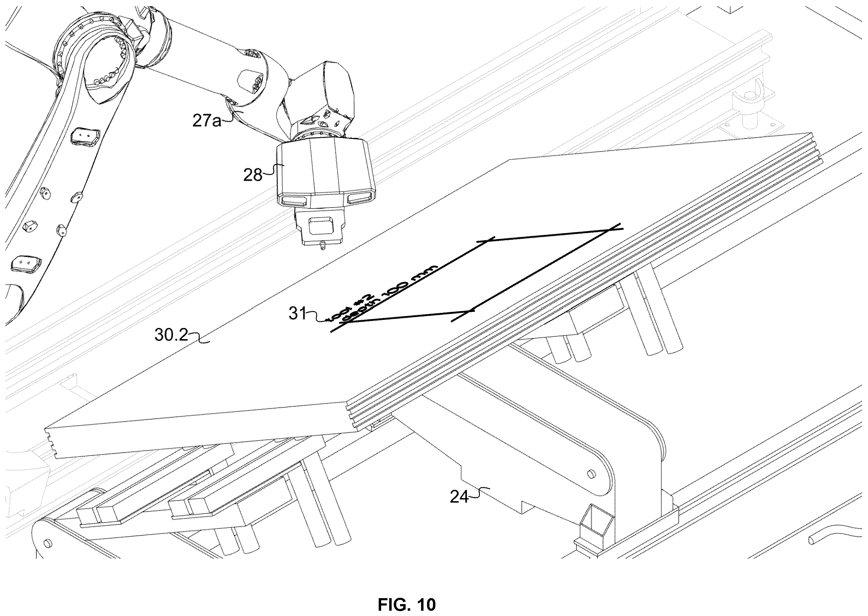

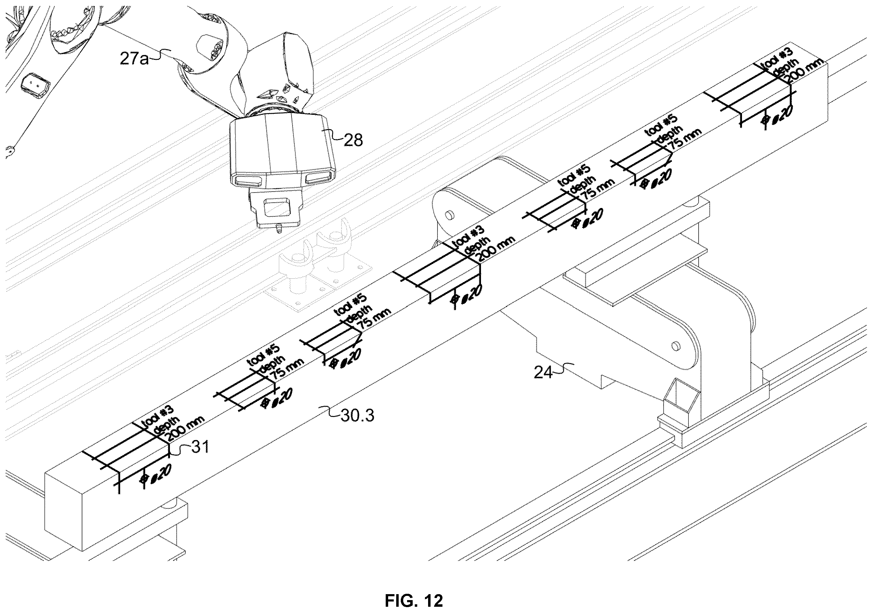

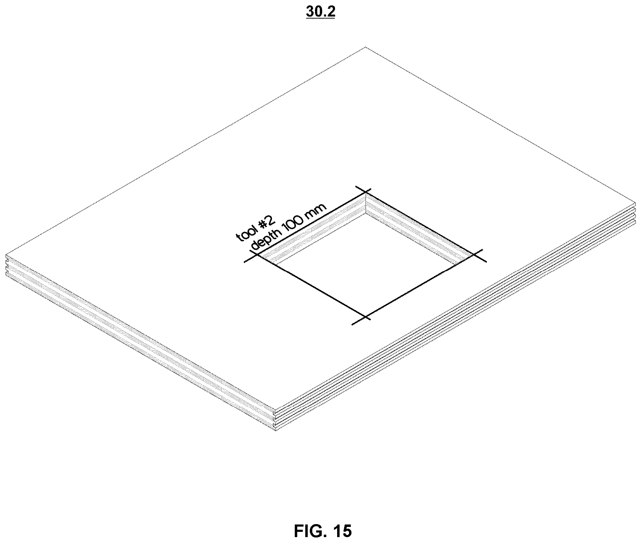

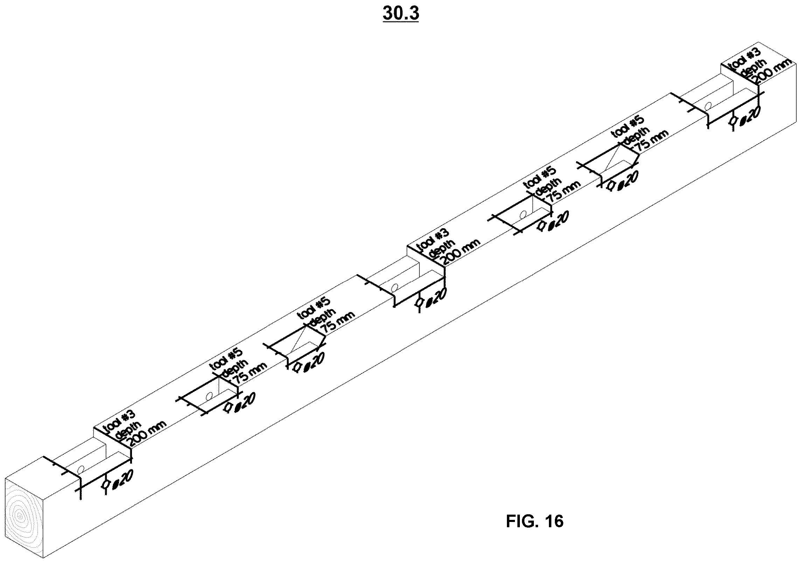

The exemplary workpiece (30.1), according to FIGs. 7 to 9 and 14, illustrate a first example of a brace obtained from the automatic location, recognition, and execution of the machining instructions (31) hand-drawn by a carpenter (40) applying the "square rule"; the exemplary workpiece (30. 2), according to FIGs. 10, 11 and 15, illustrate a second example of a panel obtained from the automatic location, recognition, and execution the machining instructions (31) hand-drawn by a carpenter (40) applying the "square rule"; and the exemplary workpiece (30. 3), according to FIGs. 12, 13 and 16, illustrate a third example of a beam obtained from the location, recognition and automatic execution of the machining instructions (31) hand-drawn by a carpenter (40) applying the "scribe rule".

### OPERATING METHOD OF THE SYSTEM

A second objective of the invention is to provide an operational method of the collaborative carpentry tool (100), which requires the following steps:
a) arranging the collaborative carpentry tool (100) on its transport unit (10) in a factory or a construction site;
b) activating the collaborative industrial robot system (20) by connecting its control system (21a) and vacuum generator (22) to an installed power grid or backup power system (23);
c) hand-drawing, by a carpenter (40), the machining instructions (31) on a workpiece, using a graphical visual language that is known to both the carpenter (40) and the collaborative industrial robot system (20);
d) positioning the workpiece on the positioning means (24) and using the user interface (25) by the carpenter (40) to authorize the collaborative industrial robot system (20) to inspect the workpiece;
e) verifying, by means of the detection system (26), the absence of persons in the operational space, issuing a light and sound alarm by transmitting a signal to the alert system (21b), and only then leaving by the manipulator (27a) its starting pose by moving on the horizontal linear movement shaft (27b), using the robotic tool changer (27c) by the manipulator (27a) to pick up from the end-effector rack (27d) the automatically changeable eye-in-hand vision system (28) and inspect the workpiece;
f) finishing the automatic inspection carried out by the manipulator (27a) and returning the automatically changeable eye-in-hand vision system (28) to the end-effector rack (27d) by means of the manipulator (27a), then returning to its starting pose and then by means of the user interface (25) display to the carpenter (40) the results of the artificial vision recognition of the identity of the workpiece, the resulting shape, the types of cut, the required interchangeable cutting tools (29), their order of application, and the estimated time to complete the machining task, as well as the relative position and orientation of all geometric figures drawn with respect to the center point of each required cutting tool (29);
g) reviewing, by the carpenter (40) at the user interface (25), the results of the artificial vision recognition and validate or cancel the operation, then issuing a light and sound alarm by transmitting a signal to the alert system (21b) to indicate that the collaborative industrial robot system (20) is unoccupied and only then allowing the carpenter (40) to enter the operational space to remove the workpiece from the positioning means (24);
h) verifying, by means of the detection system (26), the absence of persons in the operational space if the carpenter (40) validates the operation, and issuing a light and sound alarm by transmitting a signal to the alert system (21b) to indicate that the collaborative industrial robot system (20) will start machining the workpiece, waiting for a given time and only then proceed by means of the manipulator (27a) to machine the workpiece, using the robotic tool changer (27c) mounted on its mechanical interface to pick up from the end-effector rack (27d) one by one the available interchangeable cutting tools (29). In parallel, displaying via the user interface (25) the progress of the machining process until having executed all the machining instructions drawn on the workpiece and returned all the interchangeable cutting tools (29) to the end-effector rack (27d) by means of the manipulator (27a);
i) finishing the machining of the workpiece, returning the last of the interchangeable cutting tools (29) to the end-effector rack (27d) by means of the manipulator (27a), then returning to its starting pose and warn by means of the user interface (25) and issuing a light and sound alarm by transmitting a signal to the alert system (21b) to indicate that the collaborative industrial robot system (20) is unoccupied, that the workpiece is released and derived by the positioning means (24).

### EXAMPLES OF APPLICATIONS

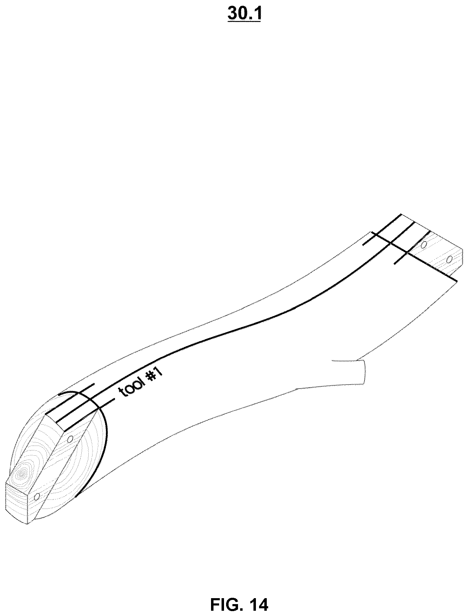

In a first example of application to perform human-robot collaborative stereotomy of a brace (30.1) of the "strut" type, made from an unsquared piece of the twisted branch of a fallen tree, the collaborative carpentry tool (100) is placed on its transport unit (10) at a construction site with access to basic services, the collaborative industrial robot system (20) is activated by connecting its control system (21a) and vacuum generator (22) to the installed power grid, a carpenter (40) hand-draws the machining instructions (31) of a "tenon" at each end of the brace (30.1), applying the "scribe rule" method and a visual graphic language that is known to both the carpenter (40) and the collaborative industrial robot system (20) to specify by means of center and peripheral lines, the orientation and contour of each "tenon" and, by means of alphanumeric signs, the areas to be removed and also the interchangeable cutting tools (29) required for each operation, in this case, a chain saw. The newly drawn brace (30.1) is then placed on the positioning means (24) and the carpenter (40) authorizes via the user interface (25) the manipulator (27a) of the collaborative carpentry tool (100) to inspect the brace (30.1) by means of its automatically changeable eye-in-hand vision system (28) to locate the lines and alphanumeric signs on the twisted surface of the brace (30.1) and to recognize thereon the machining instructions (31). Then, the carpenter (40) validates the inspection results and authorizes via the user interface (25) the collaborative carpentry tool (100) to execute the machining instructions (31). Then, the collaborative carpentry tool (100) executes the machining instructions (31) using its manipulator (27a) and the interchangeable cutting tools (29) indicated by the carpenter (40), and upon completion of the task, its positioning means (29) releases the brace (30.1) for its removal. The carpenter (40) removes the brace (30.1), temporarily assembles it into the definitive post and beam, draws the pin holes in the cheeks of both tenons, specifies the required interchangeable cutting tool (29), this time, a drill bit, and repositions the newly drawn brace (30.1) on the positioning means (24) and authorize via the user interface (25) the manipulator (27a) of the collaborative carpentry tool (100) to inspect the brace (30.1) by means of its automatically changeable eye-in-hand vision system (28) to locate the pin holes drawn on the cheeks of both tenons, recognize, and execute the new machining instructions (31), shown in FIG. 14. After completing the task, the positioning means (29) releases the brace (30.1) for its removal.

In a second example of application for performing human-robot collaborative stereotomy of a panel (30.2) of remanufactured wood, the collaborative carpentry tool (100) is available in its transport unit (10) in a factory, forming part of a production line, the collaborative industrial robot system (20) is activated by connecting its control system (21a) and vacuum generator (22) to an installed electrical network, a carpenter (40) hand-draws the machining instructions (31) of a window opening on one side and grooves on the lower and upper edges of the panel (30.2), applying a graphical visual language that is known to both the carpenter (40) and the collaborative industrial robot system (20) to specify by lines the outline of the window opening and grooves, and by alphanumeric signs the areas to be removed, the depths of the opening and grooves, and also the interchangeable cutting tools (29) required for each operation, in this case, a circular saw for the opening and a milling cutter for the grooves. Next, the newly drawn panel (30.2) is placed on the positioning means (24) and the carpenter (40) authorizes via the user interface (25) the manipulator (27a) of the collaborative carpentry tool (100) to inspect the panel (30.2) using its automatically changeable eye-in-hand vision system (28) to locate the lines and alphanumeric signs on the surface and edges of the panel (30.2) and to recognize thereon the machining instructions (31). Next, the carpenter (40) validates the inspection results and authorizes via the user interface (25) the collaborative carpentry tool (100) to execute the machining instructions (31). Then, the collaborative carpentry tool (100) executes the machining instructions (31) using its manipulator (27a) and the interchangeable cutting tools (29) indicated by the carpenter (40) and upon completion of the task, its positioning means (29) sends the panel (30.2) to the next workstation of the production line in the factory.

In a third example of application for performing human-robot collaborative stereotomy of a beam (30.3) of the "plate" type made of rough sawn lumber, the collaborative carpentry tool (100) is placed on its transport unit (10) at a construction site located at a remote location without access to an installed power grid, the collaborative industrial robot system (20) is activated by connecting its control system (21a) and vacuum generator (22) to the backup power system (23), a carpenter (40) hand-draws the machining instructions (31) of a plurality of "housed mortises" and pin holes in the beam (30.3), applying the "square rule" method and a visual graphic language that is known to both the carpenter (40) and the collaborative industrial robot system (20) to specify by means of lines the outline of each "housed mortise" and the center of each pin hole, and by alphanumeric signs the areas to be removed, the depths of the mortises, housings and pin holes, and also the interchangeable cutting tools (29) required for each operation, in this case, a milling cutter and a drill bit. Next, the newly drawn beam (30.3) is placed on the positioning means (24) and the carpenter (40) authorizes via the user interface (25) the manipulator (27a) of the collaborative carpentry tool (100) to inspect the beam (30.3) using its automatically changeable eye-in-hand vision system (28) to locate the lines and alphanumeric signs on the surfaces of the beam (30.3) and recognize thereon the machining instructions (31). Next, the carpenter (40) validates the inspection results and authorizes via the user interface (25) the collaborative carpentry tool (100) to execute the machining instructions (31). Then, the collaborative carpentry tool (100) executes the machining instructions (31) using its manipulator (27a) and the interchangeable cutting tools (29) indicated by the carpenter (40), and upon completion of the task, its positioning means (29) releases the beam (30.3) for its removal.

## Claims

1. A carpentry tool for human-robot collaborative stereotomy (100) using a collaborative industrial robot system (20), **CHARACTERIZED in that** it is controlled by artificial vision capabilities that locates, recognizes, and executes machining instructions hand-drawn by a carpenter on a workpiece; the collaborative carpentry tool (100), comprising a control system (21), a vacuum generator (22), a backup power system (23), a positioning means (24), the workpiece, or other exemplary workpiece (30. 1, 30.2, 30. 3), a user interface (25), a detection system (26a), an alert system (26b), a manipulator (27a), a horizontal linear movement shaft (27b), a robotic tool changer (27c), an end-effector rack (27d), an automatically changeable eye-in-hand vision system (28), and a plurality of interchangeable cutting tools (29); and a transport unit (10), which is a platform intended for sea or river transport, land transport, and multimodal transport, which can be permanently installed in a factory or temporarily installed on site.

2. The carpentry tool for human-robot collaborative stereotomy (100) according to claim 1, **CHARACTERIZED in that** the control system (21) is a device that processes the set of logic and power control functions that allows the monitoring and control of the mechanical structure of the vacuum generator (22), the backup power system (23), the positioning means (24), the manipulator (27a), the horizontal linear movement shaft (27b), the robotic tool changer (27c), the end-effector rack (27d), the plurality of interchangeable cutting tools (29), and the communication with the environment via the automatically changeable eye-in-hand vision system (28), the user interface (25), the detection system (26a), and the alert system (26b); and the control system (21) is arranged at one end of the transport unit (10), outside the operational space of the manipulator (27a).

3. The carpentry tool for human-robot collaborative stereotomy (100) according to claim 1, **CHARACTERIZED in that** the vacuum generator (22) is a device which, pneumatically by means of compressed air, or electrically by means of a displacement pump, is capable of creating the vacuum required by the robotic tool changer (27c) to hold and secure the automatically changeable eye-in-hand vision system (28) and each of the plurality of interchangeable cutting tools (29); and the vacuum generator (22) is arranged at one end of the transport unit (10) next to the control system (21).

4. The carpentry tool for human-robot collaborative stereotomy (100) according to claim 1, **CHARACTERIZED in that** the backup power system (23) is an electrical power source that can come from a power generator such as, for example, an internal combustion engine, fuel cells, electromagnetic generator, photovoltaic cells, or from an energy storage device such as, for example, a battery bank, capacitors and super capacitors, or from an energy harvester and nano-generator such as, for example, a micro/nano-energy source, self-powered sensors and flexible transducers; and the backup power system (23) is used only when it is not possible to connect to an installed power grid and is arranged at one end of the transport unit (10) next to the vacuum generator (22).

5. The carpentry tool for human-robot collaborative stereotomy (100) according to claim 1, **CHARACTERIZED in that** the positioning means (24) is a modular and extendable electromechanical device, which holds and secures the workpiece, automatically positions and repositions it in at least 2 translational degrees of freedom and automatically orients and reorients it in at least 1 rotational degree of freedom during a machining operation as required and in order to enable the manipulator (27a) to inspect and machine both bent logs and straight plates and bars; and the positioning means (24) is arranged in the direction of the longitudinal axis of the transport unit (10) and over almost its entire length, with both ends free to facilitate its potential connection to conveyor belts and other workpiece input and output means; in case of installing the collaborative carpentry tool (100) permanently in the factory to be part of a larger production line, for better operation, two positioning means (24) are provided.

6. The carpentry tool for human-robot collaborative stereotomy (100) according to claim 1, **CHARACTERIZED in that** the user interface (25) is a means for exchanging information and actions between a carpenter (40) and the collaborative industrial robot system (20) during human-robot interaction, which may be situationally hosted on a portable electronic device such as, for example, a tablet, a smartphone, or a display mounted on the head of the carpenter (40).

7. The carpentry tool for human-robot collaborative stereotomy (100) according to claim 1, **CHARACTERIZED in that** the detection system (26a) is a set of software-interrelated sensors such as, for example, of the 3D LiDAR type, distributed on the four corners of the transport unit (10) that continuously scan its environment in three dimensions in order to detect and differentiate people and objects, identify the direction of movement of persons in the area of operation of the collaborative industrial robot system (20), and automatically activate the alert system (26b) and other protective measures, such as interrupting the operation of the manipulator (27a) and the currently mounted interchangeable cutting tool (29); and the alert system (26b), is an electronic device, which provides visual and audible indicators of the status of the collaborative industrial robot system (20) to a carpenter (40) and anyone in its vicinity, and the alert system (26b) is arranged within the transport unit (10), outside the operational space of the manipulator (27a).

8. The carpentry tool for human-robot collaborative stereotomy (100) according to claim 1, **CHARACTERIZED in that** the manipulator (27a), is an industrial robot that manipulates an automatically changeable eye-in-hand vision system (28) for inspecting the workpiece, locating and recognizing machining instructions (31) hand-drawn by a carpenter (40), and manipulating a plurality of interchangeable cutting tools (29) to execute the machining instructions (31); and the manipulator (27a) is mounted on a horizontal linear movement shaft (27b) comprising two parallel rails, which enables it to move in the direction of the longitudinal axis of the transport unit (10) and of displacement of the positioning means (24).

9. The carpentry tool for human-robot collaborative stereotomy (100) according to claim 1, **CHARACTERIZED in that** the horizontal linear movement shaft (27b) is an external auxiliary axis of the manipulator (27a) that adds 1 degree of translational freedom to the manipulator in order to increase its range and working space, and is arranged next to the positioning means (24) with one of its ends terminating in the end-effector rack (27d) to facilitate the approach of the manipulator (27a) to the automatically changeable eye-in-hand vision system (28) and to the plurality of interchangeable cutting tools (29).

10. The carpentry tool for human-robot collaborative stereotomy (100) according to claim 1, **CHARACTERIZED in that** the robotic tool changer (27c) is an electronically controlled automatic end-effector coupling device, comprising two opposing and complementary parts to be coupled and secured to each other, wherein the part that picks up the end-effectors is mounted on the mechanical interface of the manipulator (27a); and the part that is being picked up is mounted on the automatically changeable eye-in-hand vision system (28) and on each of the plurality of interchangeable cutting tools (29); and the robotic tool changer (27c) is capable of passing through both parts electrical signals, gases, and fluids to and from the end-effector, and is powered by pneumatic energy from the vacuum generator (22) to automatically pick up, hold, and set down the automatically changeable eye-in-hand vision system (28) and the plurality of interchangeable cutting tools (29).

11. The carpentry tool for human-robot collaborative stereotomy (100) according to claim 1, **CHARACTERIZED in that** the end-effector rack (27d) is an automatic tool dispenser which is reciprocal of the robotic tool changer (27c) and which is provided with an electronically controlled gripping or clamping structure powered by pneumatic energy from the vacuum generator (22) for automatically holding, releasing, and receiving the automatically changeable eye-in-hand vision system (28) and the plurality of interchangeable cutting tools (29).

12. The carpentry tool for human-robot collaborative stereotomy (100) according to claim 1, **CHARACTERIZED in that** the plurality of interchangeable cutting tools (29) is a set adaptable in variety and quantity of electronically controlled wood machining tools arranged in the end-effector rack (27d) for use by the manipulator (27a) to execute machining instructions (31) hand-drawn by a carpenter (40) on the workpiece, or other exemplary workpiece (30.1, 30.2, 30.3).

13. A method for operating a collaborative carpentry tool for human-robot collaborative stereotomy (100) using a collaborative industrial robot system (20), **CHARACTERIZED in that** it comprises the steps of:
a) arranging the collaborative carpentry tool (100) on a transport unit (10) in a factory or a construction site;
b) activating the collaborative industrial robot system (20) by connecting a control system (21) and a vacuum generator (22) to an installed power grid or backup power system (23);
c) hand-drawing, by a carpenter (40), the machining instructions (31) on a workpiece, or other exemplary workpiece (30.1, 30.2, 30.3), using a graphical visual language that is known to both the carpenter (40) and the collaborative industrial robot system (20);
d) positioning the workpiece on a positioning means (24) and using a user interface (25) by the carpenter (40) to authorize the collaborative industrial robot system (20) to inspect the workpiece;
e) verifying, by means of a detection system (26a), the absence of persons in the operational space, issuing a light and sound alarm by transmitting a signal to the alert system (26b), and only then leaving by a manipulator (27a) its starting pose by moving on a horizontal linear movement shaft (27b), using a robotic tool changer (27c) by the manipulator (27a) to pick up from an end-effector rack (27d) an automatically changeable eye-in-hand vision system (28) to inspect the workpiece;
f) finishing the automatic inspection carried out by the manipulator (27a) and returning the automatically changeable eye-in-hand vision system (28) to the end-effector rack (27d) by means of the manipulator (27a), then returning to its starting pose and then by means the user interface (25) display to the carpenter (40) the results of the artificial vision recognition of the identity of the workpiece, the resulting shape, the types of cut, the required interchangeable cutting tools (29), their order of application, and the estimated time to complete the machining task, as well as the relative position and orientation of all geometric figures drawn with respect to the center point of each required cutting tool (29);
g) reviewing, by the carpenter (40) at the user interface (25), the results of the artificial vision recognition and validate or cancel the operation, then issuing a light and sound alarm by transmitting a signal to the alert system (26b) to indicate that the collaborative industrial robot system (20) is unoccupied and only then allowing the carpenter (40) to enter the operational space to remove the workpiece from the positioning means (24); or
h) verifying, by means of the detection system (26a), the absence of persons in the operational space if the carpenter (40) validates the operation and issuing a light and sound alarm by transmitting a signal to the alert system (26b) to indicate that the collaborative industrial robot system (20) will start machining the workpiece, waiting for a given time and only then proceed by means of the manipulator (27a) to machine the workpiece, using the robotic tool changer (27c) mounted on its mechanical interface to pick up from the end-effector rack (27d) one by one the available interchangeable cutting tools (29); in parallel, displaying via the user interface (25) the progress of the machining process until having executed all the machining instructions drawn on the workpiece and returned all the interchangeable cutting tools (29) to the end-effector rack (27d) by means of the manipulator (27a); and
i) finishing the machining of the workpiece, returning the last of the interchangeable cutting tools (29) to the end-effector rack (27d) by means of the manipulator (27a), then returning to its starting pose and warn by means of the user interface (25) and issuing a light and sound alarm by transmitting a signal to the alert system (21b) to indicate that the collaborative industrial robot system (20) is unoccupied, that the workpiece released and derived by the positioning means (24).
